# EUROPEAN PATENT APPLICATION

(11) **EP 4 582 367 A1**
(43) Date of publication of application: **09.07.2025**
(21) Application number: 24221187.8
(22) Date of filing: 18.12.2024
(51) Int. Cl.: B66F 3/35

(54) **LIFTING BAG**

(30) Priority: 28.12.2023 SE 2351522
(71) Applicant: Lysekilen AB, 453 50 Lysekil (SE)
(72) Inventor: RÖSTIN,, Anders, 135 62 Tyresö (SE); HYNELL, Harald, 185 31 Vaxholm (SE)
(74) Representative: Bjerkén Hynell KB

(57) **Abstract**

The invention relates to a lifting bag system, comprising at least one lifting bag (3) having a front wall (34), a rear wall (31) and side walls (32A,B, 33A,B) arranged to be fillable with fluid, e.g., air, gas or liquid, by means of at least one bag valve (38), a fluid containing pressure source (1), a control unit (8), and supply hoses (2, 7) arranged to enable connection of said bag valve (38) with said pressure source (1) via said control unit (8), wherein said control unit (8) includes a valve arrangement (6) arranged to control supply and exhaust of fluid to and from said lifting bag (3), respectively, and a manually operated control member (80) arranged to control said valve arrangement (6), wherein said valve arrangement (6) includes a high pressure control valve (60) connected (7) to said pressure source (1), characterized in that said valve arrangement (6) includes a high flow component (68) having a high flow outlet (65), wherein the smallest cross-sectional area (A1) of exhaust via said high flow outlet (65) from said high flow component (68) is larger than the smallest cross-sectional area (A2) of exhaust via an outlet (67) from said high pressure control valve (60) and that both supply of fluid to said lifting bag (3) and exhaust of fluid from said lifting bag (3) are controlled by said, the same, control member (80).

## Description

### TECHNICAL FIELD

The present invention relates to a system, especially suitable in rescue situations, which system includes one or more usually wedge-shaped lifting bags arranged to be fillable with a fluid, e.g., air, from a pressure source, to enable lifting/pivoting of heavy object, e.g. vehicles that have tumbled over in an accident.

### BACKGROUND

In accidents where a vehicle and people are involved, there is often an acute need to be able to either lift up the vehicle from the ground or cut it open, to save injured individuals. This is the situation that, e.g., applies for a severe bus accident where passengers are lying caught under the bus, or, e.g., in a tanker-lorry accident where environmentally damaging substances risk leaking out into the environment and polluting, or in the danger of fire and explosion.

Known solutions do have drawbacks. Cutting, due to being relatively slow and also sometimes hazardous. Lifting systems may be quicker and less hazardous but known solutions have some problems.

One such a lifting device is for instance known by WO 79/00753. Said known lifting device incorporates a wedge-shaped cushion formed by a top part and bottom with connecting walls, and which is arranged to be fillable with fluid. The top part, the bottom part and other parts of the cushion consist of formable material and are joined to form a common unit in the forward edge of the cushion. Said forward edge is equal thick as the back edge of the cushion. The edges consist of bars in pairs or of pairs of pivotally legs, which are pivotably supported to each other in a pivot, and the thickness of said edges make it difficult to reach narrow spaces with the said lifting device.

US 3,990,681 and US 4,060,170 present further known solutions, which generally are subject to the same kind of problem as mentioned above.

From EP 1940721 there is known a solution that eliminates the above problem, by means of having a forward edge of the lifting bag extended in relation to the front wall thereof, thereby forms a thin fore extended part, which extends in front of and outside said front wall, enabling that the bottom part are expanded without preventing the fore part of the wall of the lifting bag from smoothing out and forming the fore part of the lifting cushion in a filled state, so that it is allowed to be interposable along a support under or between objects to be lifted.

However, there still exist disadvantages with known systems that may cause problems and/or difficulties in acute rescue situations that may result in undesired delays.

### SUMMARY OF THE INVENTION

It is an object of the invention to provide an improved system for use of lifting bags, which is achieved by means of a system as defined in the appended claims.

Thanks to the invention, an improved system is provided that is more flexible and more easily adapted to different needs that may exist in various kinds of acute emergency situations. Hence, acute needed actions may be more quickly solved. An especial advantage is that both low-pressure lifting bags and high-pressure lifting bags may be controlled by the and the same control unit and further that one and the same control unit may be used simultaneously for lifting and catching an object at the same time.

### DESCRIPTION OF THE ENCLOSED FIGURES

In the following, the invention will be described in more detail with reference to the attached figures.
- Fig. 1: shows a perspective view of the system in relation to a vehicle lying sideways to be pivoted to a position standing on its wheels,
- Fig. 2: shows a similar view as in Fig. 1 wherein a larger vehicle is being handled,
- Fig. 3: shows a preferred embodiment of a control unit used according to the invention,
- Fig. 4: shows the same control unit as in Fig. 3 wherein the inner valve arrangement is shown,
- Fig. 5: shows a preferred embodiment of a lifting bag and cross-sectional views of the different walls thereof,
- Fig. 6: shows an alternative valve arrangement for use in connection with a single lifting bag,
- Fig. 7: shows a further alternative of a valve arrangement for handling two lifting bags,
- Fig. 8: shows a view of a vehicle lying on its side wherein securing devices are used to safely handle pivoting of the vehicle by means of a pair of lifting bags,
- Fig. 9: shows a similar situation as in Fig. 8 but from a different view, and,
- Fig. 10: shows a preferred embodiment of a bag valve arrangement according to the invention.

### DETAILED DESCRIPTION

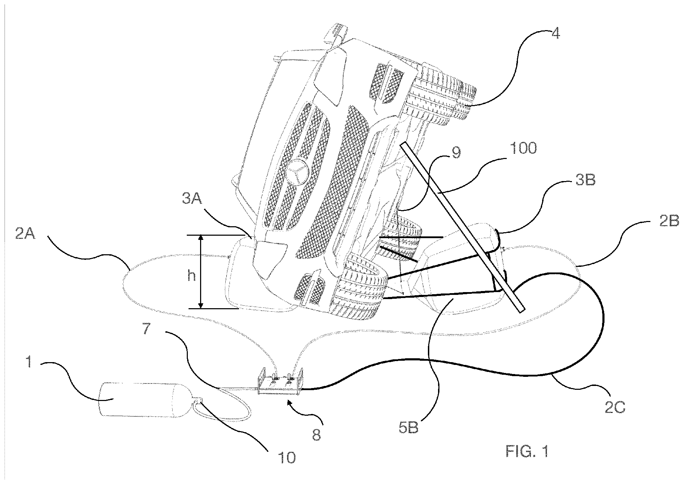

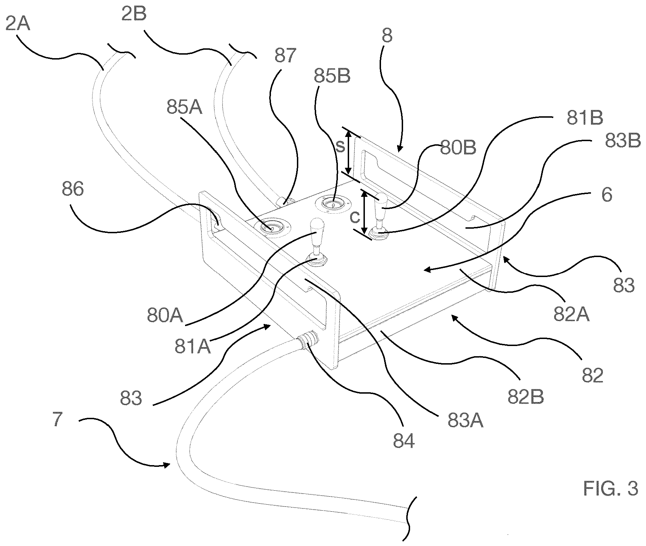

In Fig. 1 there is shown a vehicle 4 that has been in an accident lying on its side due to an accident. By means of the invention the vehicle 4 may easily and safely be rotated to again be positioned on the wheels. It is shown that there is use of two lifting bags 3A, 3B. One of the lifting bags 3A is used to lift and pivot the vehicle 4. The second lifting bag 3B is used to fetch the vehicle 4 to provide for a more gentle landing when again being positioned up right, which will enable rescuing individuals without any need of cutting opening/s of the vehicle. Each lifting bag is provided with its own supply hose 2A, 2B for individual control of the amount of air/pressure within the lifting bag 3A, 3B. Further, there is shown a telescopic support strut 100 that may be used as extra support to control pivoting of the vehicle. The support strut 100 may be controlled by means of a third supply hose 2C. Both lifting bags 3A, 3B and the support strut 100 may be controlled by means of one and the same control unit 8, e.g. by means of having three outlet couplings or by means of using one of merely two couplings 86, 87 (see Fig. 3) for the support strut 100 and the other for a lifting bag.

There is a pressure source 1 arranged to provide pressurized gas for the lifting bags 3A, 3B. The pressure source 1 is preferably a movable source, e.g. in the form of a gas flask, but may of course also be in the form of a compressor (not shown) that may be powered by a battery. In the latter embodiment an the electrically powered compressor may also be used as an evacuating pump, which may be advantageous in some applications. The pressure source 1 is arranged with an outlet valve device 10 of a special kind that will allow a relatively large flow of gas/air out of the pressure source without causing ice build-up, which otherwise may jeopardize the flow from the pressure source 1, which normally will contain gas at a pressure of 200-300. The valve device 10 preferably reduces the pressure to 8 bar or lower. preferably a piston pressure reduction valve. There is a connection hose 7 that leads from the outlet valve device 10 of the pressure source to a control unit 8.

The control unit 8 is connected to both supply hoses 2A, 2B, such that one and the same individual may operate and control the two lifting bags 3A, 3b. In a preferred embodiment each lifting bag 3A, 3B is arranged with its own control member (see ref. 80, Fig. 3) arranged to facilitate individual and parallel operation of each one of the lifting bags 3A, 3B. Hence, it is for example feasible for an operator to supply gas to one of the lifting bags 3A at the same time as gas is discharged from the other bag 3B. Further, it is shown that the inflated height H of at least one of the lifting bags preferably is such that it may provide a lift of at least 0,5 meter, preferably at least 0,8 meter and more preferred one meter or more. Moreover, it is shown that the lifting bag 3B arranged at the bottom side of the vehicle 4 preferably is attached to the vehicle 4 by means of securing arrangement 5. The securing arrangement 5 preferably includes a plurality of ropes or similar means to arrange for a safe grip around the lifting bag 3 and enable easy attachment of the ends of the securing arrangement 5 to the vehicle 4.

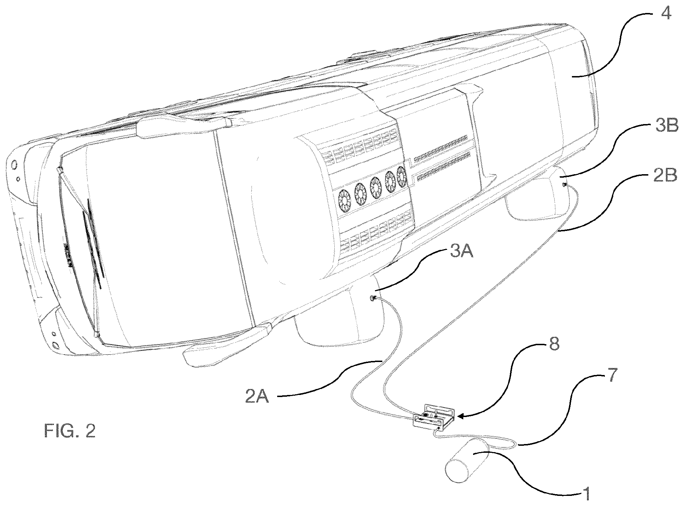

In Fig. 2 there is shown a larger vehicle 4 being lifted by means of a system according to the invention, wherein two lifting bags 3A, 3B may be arranged on the same side of the vehicle 4 for pivoting a large vehicle into an upright position, or at least to a sufficient height to allow for taking care of people stuck underneath the side of the vehicle.

The lifting bags 3A, 3B shown in Figs. 1 and 2 are of a low-pressure kind, wherein the over pressure in the lifting bag will normally be within the range of 0 to 3 bar, preferably not exceed 1 bar over pressure. Such a low-pressure bag will preferably have a volume of at least 200 litres, more preferable a volume between 300-1500 litres. There also exist high pressure lifting bags (not shown) which normally will operate at an overpressure above 3 bar and will have a much smaller volume than a low-pressure lifting bag, e.g. in the range of 50-150 litres. A high-pressure lifting bag will preferably have an upper pressure limit of 15 bar, whereas as already mentioned above a low pressure lifting bag preferably has a maximum over pressure of 1 bar. One frequently occurred situation is that at first there may be need of using high pressure lifting bag (not shown) to provide for sufficient space to introduce a low pressure lifting bag underneath the object that needs to be lifted/pivoted, or vice versa, wherein a higher lift may be achieved with the second lifting bag. However, in other situations there will be sufficient space from start to use lifting bags, as schematically shown in Figs. 1 and 2. As will be described in more detail below the invention includes a valve arrangement 6 that can control a low pressure lifting bag to be quickly deflated, thanks to providing a separate high flow component 68 having a high flow outlet 65 separate from separate high pressure control valve 60 having its own exhaust outlet 67, which may be of great importance in some rescue situations.

Both the high pressure lifting bags and low pressure lifting bags may be provided with safety valves, which will be arranged directly in one of the walls of a lifting bag and/or which can also be arranged within the control unit. Accordingly, the safety valves have the function to safeguard that the low pressure lifting bag is not supplied with a pressure above its intended maximum pressure threshold, which preferably is about 1 bar for low pressure lifting bag and in the range of 8-15 bar for a high pressure lifting bag.

As is evident for the skilled person the lifting bags according to the invention are not limited to the use in connection with lifting up vehicles but may also be used for urban search, rescue (USR), in connection with towing, etc..

In Fig. 3 there is shown a preferred control unit 8 in accordance with the invention. There is shown that there is an input coupling 84 intended for releasably coupling for supply of gas from a pressure source 1. The control unit comprises a housing 82 that includes and encompasses a valve arrangement 6, that will be described in more detail below. The housing 82 comprises a bottom portion 82B and a top portion 82A. The top portion 82A is arranged with passages intended for control members 80A, 80B and also pressure gauges 85A, 85B. The control members 80A, 80B are preferably spring actuated arranged such that they will return to a non-activating position when not pushed/pulled. More preferred there are arranged locking devices (not shown) that may lock a control member 80A, 80B in a desired active position, e.g. pressure releasing. The two housing parts 82A, 82B will cover the top, the bottom, the front and the back of the valve arrangement 6 within the housing. The sides of the housing will be covered and protected by side plates 83, which also include upwardly extending hand grips 83A facilitating easy gripping and handling of the control unit 8. The supply coupling 84 is arranged at one of the side plates 83 in order to provide space for the user in an area in front of the front panel of the housing.

The upwardly extending side plates 83 extend a substantial distance S above the top of the control members 80A, 80B extend, which provides the advantage that the control members 80A, 80B have some protection, e.g. if the control unit 8 is accidentally dropped or touched by branches to improve reliable operation of the control unit 8. There are also two outlet couplings 86, 87 arranged at the housing 82, which output couplings 86,87 are arranged on the side that is opposite to the front side of the control unit 8, which also provides for easy use of the system since the individual using the control will have the supply hoses 2A, 2B directed away from him in the direction of his sight. The side plates 83 preferably provide for gripping by means of having an open passage 83B extending generally parallel lengthwise with the top portion of the housing 82, which passage 83B will then provide space for the fingers of the user to pass through to have a safe gripping of the control unit 8. The distance from the grip to each control member 80A, 80B facilitates easy activation, i.e. each of control member 80A, 80B is easily controlled by means of the thumbs of the user.

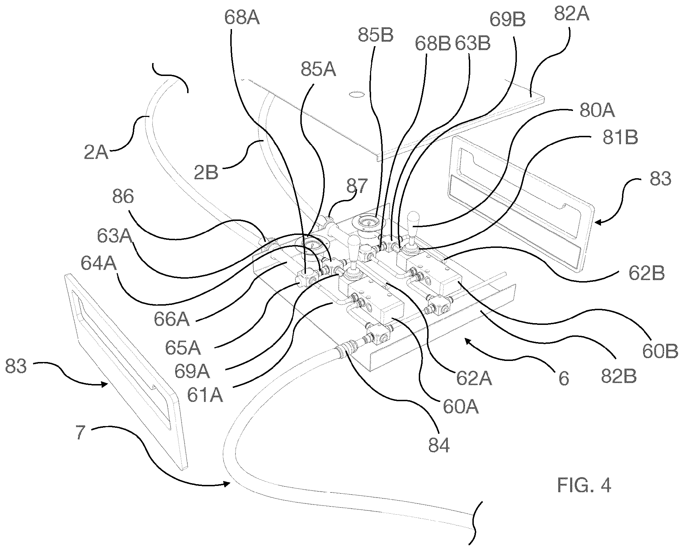

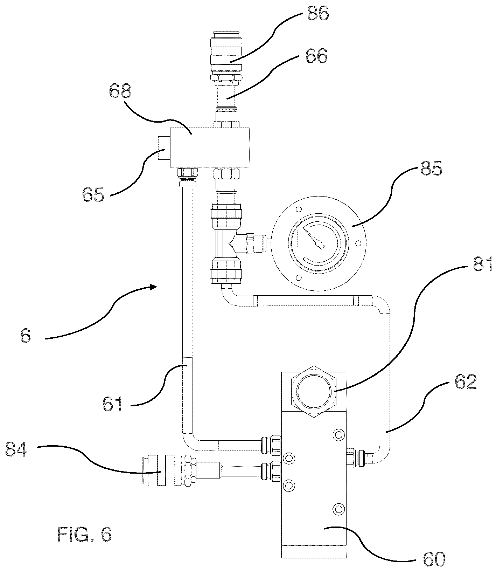

In Fig. 4 there is shown a perspective view of the control unit 8 wherein the top portion 82A of the housing 82 and the side plates 83 have been removed from its intended position. It is shown the valve arrangement 6 and that within the interior of the housing 82 there is arranged two substantially parallel lines A, B of valve sets and hoses that may provide for a desired operation of the lifting bags 3A, 3B. It is to be noted that the invention is not limited to the use of two lines, but also relates to a single line, as is evident from the claims and e.g. Fig 6, which therefore do not specify A and B as used in Fig. 4. As already mentioned, the pressure source 1 is connected to the control unit via a supply coupling 84. From the supply coupling 84 there are arranged first supply hoses that supply pressurized gas to one each of two high pressure control valves 60A, 60B. Each high-pressure valve 60A, 60B is in turn connected with a first outlet line 61A, 61B to a high flow/low pressure component 68A, 68B. Further there is a second outlet line 62A, 62B from the high-pressure control valve 60A, 60B to an intermediate coupling device 63A, 63B, which in turn is arranged with a connection line 64B to the high flow/low pressure component 68A, 68B. From the high flow/low pressure component 68A, 68B there is a supply/exhaust line 66A, 66B each ending in an outlet coupling 86, 87 respectively, for releasable attachment of supply hoses 2A, 2B.

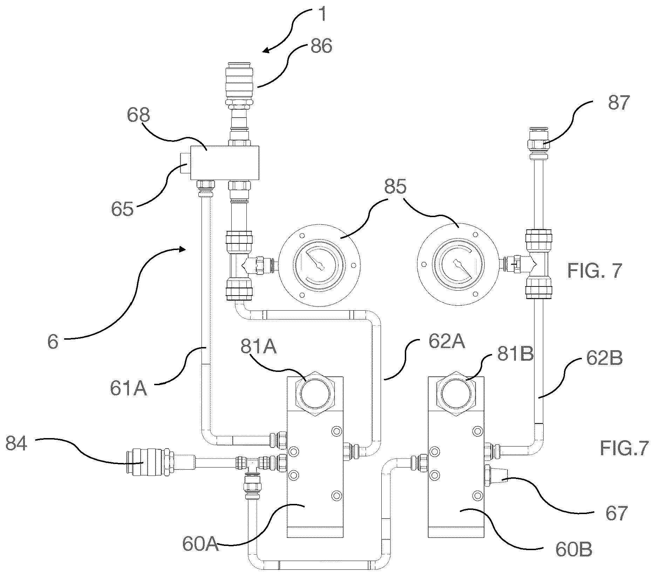

The high flow/low pressure valve component 68 has an outlet 65A for high flow exhaust. The pressure-drop of exhaust via the high flow outlet 65A from said high flow valve device 68 is lower than the pressure-drop of exhaust via an outlet 67 (see Fig. 7) from said high pressure control valve 60. In order to achieve the latter the smallest cross-sectional area A1 from the coupling 86 to the outlet 65 is larger than the latter the smallest cross-sectional area A2 from the second coupling 87 to the outlet 67 from the high-pressure valve 60. Preferably the cross-sectional area A1 is larger than 60 mm2, more preferred larger than 70 mm2.

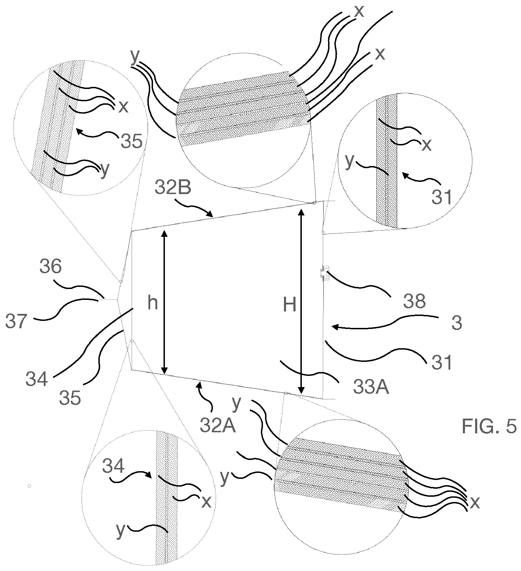

In Fig. 5 there is shown an exemplary, preferred embodiment of a lifting bag 3 according to the invention. As can be noted, the lifting bag has a somewhat tapered shape, meaning that the front wall 34 of the lifting bag has a smaller, transversal extension h than the rear wall 31. Furthermore, it is shown that there are four sides 32A, 32B, 33A, 33B which are joined at their lengthwise ends and which at their front and back end are joined with the front wall 34 and the rear wall 31 respectively. There are one lower wall 32A and one upper wall 32B and two side walls 33A, 33B (the second side wall not shown) wherein preferably all four have equal dimensions.

According to the invention, basic material for each one of the walls of the lifting bag 3 is preferably at least two layers X of a polymer material and at least one layer Y of filament reinforcing material in between those two polymer layers X, in all sides thereof As can be noted, there may be a use of larger number of layers in one or some of the walls. According to a preferred embodiment there are more layers in the side walls 32A, 32B, 33A, 33B, implying at least using three layers X of polymeric material and at least two layers Y of filament reinforcing material, i.e. a total number N of at least 8 layers. Suitably, there is also a layer of PVC in between the three basic layers and the additional 5 layers.

According to a most preferred embodiment there is a use of at least four layers X of polymeric material and at least two layers Y of filament, reinforcing material in the side walls 32A, 32B, 33A, 33B, and even more preferred the use of five layers X of polymeric material and three layers of filament material. Further, as is shown in both the front wall 34 and the rear wall 31 of the preferred embodiment there is only use of two layers X of polymeric material and one layer Y of filament reinforcing material, which filament reinforcing material may be drop stitch.

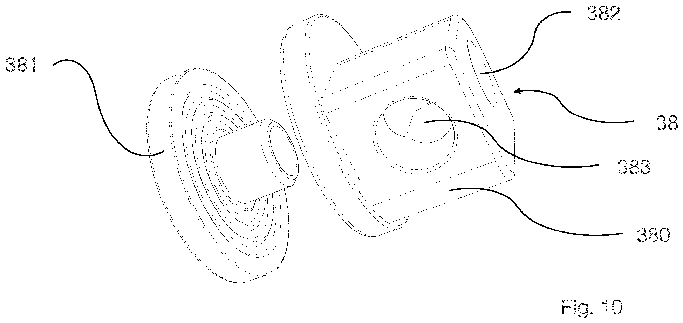

It is further shown that there is a bag valve member 38 anchored into the rear wall 31. As shown in Fig. 10 the anchoring of the bag valve member 38 is preferably achieved by means of an outer fixed housing 380, fixed to an inner fixation device 381, wherein the outer housing 380 preferably is provided with a first connection means 382 (e.g. threads), e.g. to enable interchangeable arrangement of different kind of inlet and outlet bag valve devices (not shown) and/or sensor devices (not shown). Preferably there is a second connection means 383, e.g. to secure a safety valve (not shown). According to a further embodiment there are three connections, e.g. by making a through hole along the side hole 383, and that the third connection may be used for a sensor. (not shown)

At the front end of the lifting bag 3 there is arranged a retainer member 35, which is in the form of sheet-formed stripe extending from one joint to the other of the joints that join the front end of each side wall 32A, 32B and the front wall 34. Accordingly, the retainer member 35 is jointly anchored to the lifting bag 3 together with the end attachment parts of the front wall 34 and one pair of said side walls 32A, 32B. The thickness of the retainer member 35 is preferably relatively small, e.g below 10 mm, even more preferred below 8 mm, to make it feasible to easily introduce a non-inflated lifting bag 3A, 3B into small gaps of an object. The retainer device 35 also includes an attachment member 36 fixated transversally onto the retainer member 35 adjacent the center thereof. Further, the attachment member 36 includes attachment devices, e.g. reinforced holes that are suitable for attachment of ropes or the like. In the figure there is also shown an enlargement of each wall part.

In Fig. 6 there is shown an exemplary arrangement of a single line arrangement 6 that may be used in connection with the invention. In this shown example the devices used are generally the same as in one line described in relation to Fig. 4 and will therefore not be described in more detail. However, it is notable that in this single line arrangement it is preferred to merely use a direct connection of the second line 62 to the high flow/low pressure component 64.

In Fig. 7 there is shown a further alternate embodiment of the valve arrangement 6 according to the invention wherein there is use of two parallel lines like in Fig. 4 but where the second line is different from the first line. The first line, wherein there is use of reference A, is basically the same as shown in Fig. 7 and therefore also having basically the same function as shown in Fig. 4. However the second line with reference B, is different in that there is no need for a high flow/low pressure component, but instead there may be use of an air muffler 67 attached to the high-pressure control 60B.

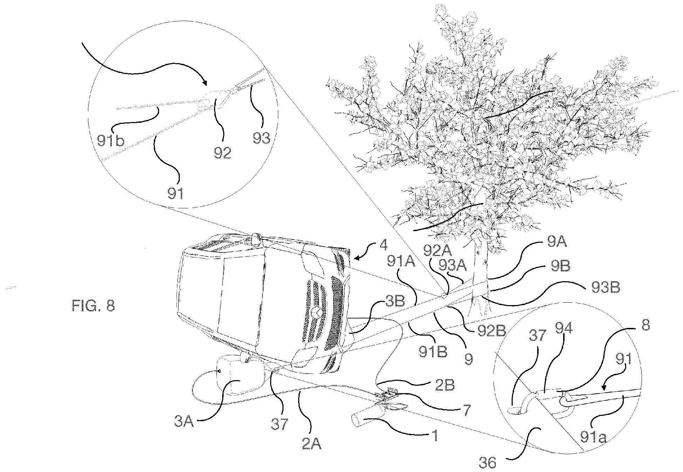

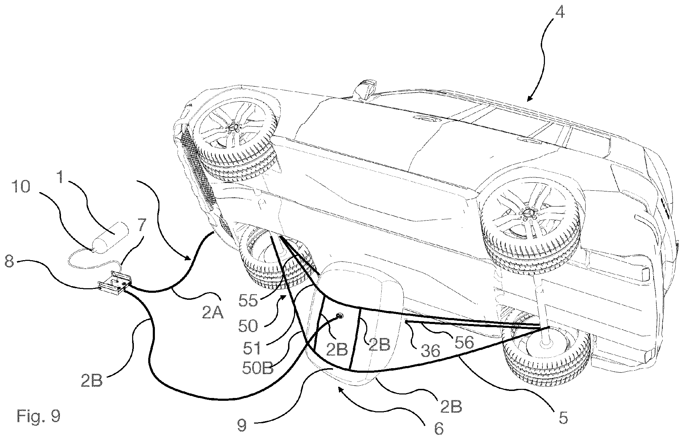

In Figs.8 and 9 there is shown a view including a vehicle 4 that has been through an accident and is lying sideways and wherein lifting bags 3A, 3B in accordance with the invention are to be used in order to pivot the car onto its wheels. Basically, this has already been described in relation to Fig. 1 as is well understood when looking at the figure.

However, Figs. 8 and 9 in a more detailed manner show how different securing devices 5, 9 may be used to securely handle operation of the lifting bags 3A, 3B. It is shown that one of the lifting bags 3B is safely secured to the underside of the vehicle 4, by means of a first securing device 5 as has been shown and described in relation to Fig. 1, and shown more specifically in Fig. 9

Further there is shown that there is a second securing device 9 which has as purpose to fixate the first lifting bag 3A to a fixated point in a nearby location, e.g. a tree. It is made use of ropes 91or anything similar. Preferably there is use of two ropes 91A, 91B that are attached with one end 91a to an attachment member 94 which in turn is attached to the retainer member 36 of the lifting bag 3A. Accordingly, there is one such rope 91A attached adjacent one end of the retainer member 36 and another one 91B attached adjacent a second end of said retainer member 36, such that forces applied may be evenly distributed onto the lifting bag 3. As noted the enlargement shown in the upper left-hand view of the figure there has been use of a fixation part 93 according to the invention, which fixation part 93 may be in the form of a loop positioned around a tree, having an adjustable fastening member 92 attached thereto, intended for adjustable fixation of the second end 91b of the rope 91. Preferably the fixation device 92 is of a known kind wherein the second end of the rope 91 may be anchored and also tightened by means of a wedging action when force is applied thereto. Preferably there is used two parallel fixation parts 93A, 93B. However, one 93 may suffice having both ropes 91A, 91B attached thereto by means of two fastening members (not shown). It is foreseen that the object it self may also be anchored by means of separate anchoring ropes/belts.

In Fig. 9 there is shown a view from another position of the vehicle shown in Fig. 8, wherein a preferred embodiment of attaching the second lifting bag 3B is shown in more detail, as already described in relation to Fig. 1.

It is evident for the skilled person that a variety of modification may be done within the scope of the claims. For instance, the mentioning of a high flow component, must be interpreted in broad sense, since as is understood by the skilled person there exist a variety of design options to arrange for a high flow, implying that the high flow component is to construed broadly including numerous design options that may fulfil the function of facilitating low resistance, high flow to quickly empty a low pressure lifting bag. Further, it is foreseen that the control unit may be arranged with a pair of couplings, one for low pressure and one for high pressure, connected to one each of two pressure lines and that there may be arranged a senor and/or switch that senses which coupling is being used and then connects that coupling to the used kind of pressure need, e.g. the high pressure arrangement if the high pressure coupling is used and vice versa. Hence, by using a low-pressure lifting bag and connecting that specific coupling to the low pressure line will automatically arrange for use of the high flow component when emptying that low pressure bag. Furthermore, it is foreseen that some of the specific aspects, e.g. the novel design of the lifting bags, the novel design of the outer housing of the adapter housing, described above may be the subject for its own protection by means of one or more divisional applications, possibly without limitation to the features defined in originally filed claim 1.

## Claims

1. A lifting bag system, comprising at least one lifting bag (3) having a front wall (34), a rear wall (31) and side walls (32A,B, 33A,B) arranged to be fillable with fluid, e.g., air, gas or liquid, by means of at least one bag valve (38) to a height of at least 0,5 meters, a fluid containing pressure source (1), a control unit (8), and supply hoses (2, 7) arranged to enable connection of said bag valve (38) with said pressure source (1) via at least one outlet coupling (86, 87) of said control unit (8), wherein said control unit (8) includes a valve arrangement (6) arranged to control supply and exhaust of fluid to and from said lifting bag (3), respectively, and a manually operated control member (80) arranged to control said valve arrangement (6), wherein said valve arrangement (6) includes a high pressure control valve (60) connected (7) to said pressure source (1), wherein said high pressure control valve (60) includes at least one supply outlet (61, 62) and at least one exhaust outlet (67) and wherein said valve arrangement (6) is arranged to control a low pressure lifting bag (3) operating at a pressure below or at 3 bar and/or a high pressure lifting bag operating at a pressure above 3 bar, **characterized in that** said valve arrangement (6) is arranged to control said low pressure lifting bag (3) by means an exhaust arrangement of fluid from said low pressure lifting bag by means of a connection to a high flow component (68) having a high flow outlet (65), wherein the smallest cross-sectional area (A1) of exhaust via said high flow outlet (65) from said high flow component (68) is larger, preferably at least 50% larger, than the smallest cross-sectional area (A2) of exhaust via said outlet (67) from said high pressure control valve (60) and that both supply of fluid to said lifting bag (3) and exhaust of fluid from said lifting bag (3) are controlled by said, the same, control member (80).

2. A lifting bag system according to claim 1, **characterized in that** said control member (80) is arranged to control said high pressure control valve (60) and that said high pressure control valve (60) has a fluid connection (61) with said high flow component (68) arranged to control operational position of said high flow component (68) by means of said control member (80) to provide for supply or exhaust of fluid, respectively.

3. A lifting bag system according to claim 1 or 2, **characterized in that** said high pressure control valve (60A) and said high flow component (68) included in a first line (A) of valve sets and hoses are included in a housing (82) of said control unit (8) together with and in parallel with a second line (B) of valve sets and hoses including a second high pressure control valve (60B), wherein said housing is arranged with one inlet coupling (84) and two outlet couplings (86, 87).

4. A lifting bag system according to claim 3, **characterized in that** said second high pressure control valve (60B) is in direct connection with a second one of said outlet couplings (87) and wherein the cross-sectional area (DA1) of an outlet hose (66A) attached to the first outlet coupling (86) connected to the high flow component (68) is larger, preferably at least 50% larger, than the cross-sectional dimension (DA2) of an outlet hose (66B) attached to said second coupling (87).

5. A lifting bag system according to claim 3 or 4, **characterized in that** said first and second couplings (86, 87) are different, arranged to merely enable connection of a low pressure lifting bag (3) to be connected to said first coupling (86) and merely a high pressure lifting bag to be connected to said second coupling (87), and further that there is a low pressure safety valve operationally connected to the pressure line including said first coupling (86) and a high pressure safety valve operationally connected to the pressure line including said second coupling (87), wherein the safety release pressure level of said low pressure safety valve is lower than the release pressure level of said high pressure safety valve.

6. A lifting bag system according to any one of the preceding claims, **characterized in that** said walls of said lifting bag (3) is made from a laminate including at least one reinforcement layer (Y) and at least two polymer layers (X), wherein at least one of said side walls (32A,B, 33A,B) includes a larger number (N) of layers (Y, X) than said front wall (34), and rear wall (31), wherein preferably said number (N) is larger than five, more preferred larger than six, even more preferred said number (N) is larger than seven, wherein more preferred the number of polymer layers (X) may be + 2 layers in relation to the number of reinforcement layer (Y).

7. A lifting bag system according to any one of the preceding claims, **characterized in that** said lifting bag (3) includes at least one fixedly attached adapter housing (380) having at least one adapter fitting (382), enabling attachment of a variety of devices enabling providing different function, wherein preferably one of said devices is said bag valve (38) and/or a sensor device and/or a safety valve, wherein more preferred there are at least two, suitably three, adapter fittings (382, 383) in said adapter housing (380).

8. Lifting bag system according to any one of the preceding claims, **characterized in that** the lifting height (H) of said lifting bag (3) is at least 0.5 meter, preferably at least 0,8 meter and more preferred 1 meter or more.

9. A method of operating a lifting bag system according to any one of claims 1-8, wherein said control unit (8) including two manually operated control members (80) is arranged to enable supplying gas to both high pressure lifting bags (3) and low pressure lifting bags (3).

10. A method of operating a lifting bag system according to claim 9, wherein said control unit (8) includes said valve arrangement (6) which by means of at least one of said control members (80) may connect a low pressure lifting bag (3) to said high flow outlet (65) enabling high flow at low pressure, preferably by having an outlet line connected to said high flow outlet (65) that has a smallest cross-sectional area (A1) of at least 60 mm2.
